# DEMANDE DE BREVET EUROPEEN

(11) **EP 0 578 573 A1**
(43) Date de publication de la demande: **12.01.1994**
(21) Numéro de dépôt: 93401767.4
(22) Date de dépôt: 07.07.1993
(51) Int. Cl.: H04B 3/06, H04N 7/10

(54) **Procédé et agencement de correction des pertes affectant un signal vidéo transmis par une liaison de type paires de fils**

(30) Priorité: 07.07.1992 FR 9208368
(71) Demandeur: ALCATEL RESEAUX D'ENTREPRISE, F-75015 Paris (FR)
(72) Inventeur: Chmielnicki, Marek, F-75015 Paris (FR)
(74) Mandataire: Schaub, Bernard

(57) **Abrégé**

L'invention concerne un procédé de correction des pertes affectant un signal vidéo transmis par une liaison de transmission de type paire de fils, ainsi qu'une interface dotée d'un agencement de correction mettant en oeuvre ce procédé.

Elle comporte un agencement de correction chargé de compenser les pertes de signal introduites par la liaison de transmission au profit dudit autre appareil vidéo, ledit agencement comportant lui-même un circuit correcteur (8), qui est situé entre un étage d'entrée (7) et un étage de sortie (12) du sous-ensemble (2), et qui corrige le signal vidéo qu'il reçoit en fonction de deux valeurs moyennes déterminées à partir des tops de synchronisation, l'une à partir de la valeur de ces tops à leur apparition et l'autre à partir de la valeur de ces mêmes tops, entre la phase de croissance et de décroissance de chacun.

## Description

L'invention concerne un procédé de correction des pertes affectant un signal vidéo ou vidéo et son transmis par une liaison de transmission de type paire de fils, notamment symétrique et torsadée. Elle concerne aussi une interface pour liaison de transmission qui met en oeuvre le procédé évoqué ci-dessus par l'intermédiaire d'un agencement de correction approprié.

La transmission d'un signal de type vidéo par une paire symétrique torsadée est une solution économique convenant pour les liaisons réalisées dans le cadre d'installations où les distances sont généralement inférieures au kilomètre.

Pour le bon fonctionnement de ces liaisons de transmission, il est connu de prévoir des interfaces qui permettent de tenir compte des pertes introduites par les câbles dans lesquels sont incorporées ces paires.

Or ces pertes, fonction de la constitution des câbles sont aussi liées à la longueur des liaisons qui est elle-même fonction des besoins et qui peut donc être très variable pour les différentes liaisons d'une même installation.

Il est donc habituel de prévoir des agencements de correction à la réception, ces agencements réglables, étant usuellement placés en bout de liaison au niveau des interfaces.

Toutefois la mise au point des différentes liaisons du type évoqué ci-dessus d'une installation reste une opération longue et par conséquent coûteuse puisque chacune de ces liaisons doit être contrôlée et que des réglages individuels doivent être effectués.

En vue de faciliter ces opérations , l'invention propose un procédé de correction des pertes affectant un signal de type vidéo transmis par une liaison de type paire de fils et un agencement de correction appliquant ce procédé dans le cadre d'une interface de transmission desservant une liaison de transmission telle que définie ci-dessus.

Selon une caractéristique du procédé selon l'invention, la valeur moyenne des tops de synchronisation est exploitée pour déterminer deux facteurs de correction des pertes de transmission dues à la liaison, un premier facteur correctif de perte réactive étant obtenu à partir de la valeur déterminée à l'apparition des tops de synchronisation, un second facteur correctif de perte résistive étant obtenu à partir d'une valeur déterminée en cours de top, entre les phases de croissance et de décroissance de top.

L'invention propose aussi une interface, pour liaison de transmission par paire(s) de fils pour signal vidéo, du type comportant au moins un sous-ensemble de voie réception dans lequel un signal vidéo, reçu d' un appareil vidéo distant relié au sous-ensemble par une paire de fils de la liaison, est reconstitué, au profit d'un autre appareil vidéo raccordé à l'interface.

Selon une caractéristique de l'invention, cette interface comporte un agencement de correction chargé de compenser les pertes de signal introduites par la liaison de transmission au profit dudit autre appareil vidéo, ledit agencement comportant lui-même un circuit correcteur, qui est situé entre un étage d'entrée et un étage de sortie du sous-ensemble et qui corrige le signal vidéo qu'il reçoit en fonction de deux valeurs moyennes déterminées à partir des tops de synchronisation, l'une à partir de la valeur de ces tops à leur apparition et l'autre à partir de la valeur de ces mêmes tops, entre la phase de croissance et de décroissance de chacun.

L'invention, ses caractéristiques et ses avantages sont précisés dans la description qui suit en liaison avec les figures évoquées ci-dessous.

La figure 1 présente le schéma d'une interface de transmission de signaux de type vidéo.

La figure 2 présente un diagramme des temps relatif au procédé de correction, selon l'invention.

La figure 3 présente le schéma d'un agencement de correction de voie de réception pour interface de transmission.

La figure 4 présente le schéma d'un circuit correcteur pour agencement selon l'invention.

La figure 5 présente le schéma d'un dispositif d'automatisation pour agencement correcteur de voie de réception.

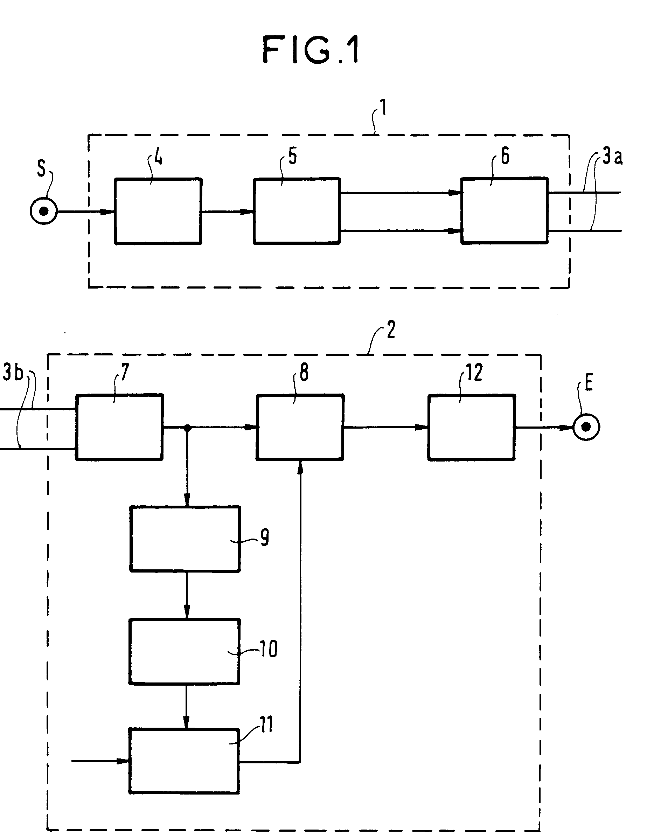

L'interface de transmission de signaux de type vidéo ou vidéo et son présenté en figure 1 se subdivise classiquement en un sous-ensemble 1 de voie émission et un sous-ensemble de voie réception 2 destinés à permettre la mise en liaison d'un premier appareil vidéo, non représenté, aux bornes d'entrée E et de sortie S duquel l'interface est raccordée avec un second appareil vidéo distant, relié à l'interface par une liaison 3 de type téléphonique composée d'une ou de plusieurs paires symétriques usuellement torsadées, telles 3a et 3b.

Le sous-ensemble 1 de voie émission qui reçoit les signaux issus du premier appareil vidéo comporte successivement un circuit d'entrée 4, adaptateur d'impédance, qui est relié à la borne S, un circuit symétriseur de signal 5 situé en aval du circuit d'entrée 4 et un étage de sortie 6 inséré entre le circuit symétriseur 5 et une paire de fils 3a à laquelle l'appareil distant, non représenté, est relié.

L'interface reçoit le signal provenant de l'appareil distant par l'intermédiaire d'une paire de fils 3b qui est reliée à un étage d'entrée 7 de son sous-ensemble 2 de voie réception.

Un circuit correcteur 8 est relié en aval de l'étage d'entrée 7 pour permettre de reconstituer le signal émis par l'appareillage distant en compensant les pertes introduites par le câble dont fait partie la paire de fils 3b qui transmet ce signal.

Le circuit correcteur 8 est commandé par une chaîne de correction comportant un circuit d'extraction de signal de synchronisation 9 relié en sortie de l'étage d'entrée 7 en parallèle avec le circuit correcteur 8, un circuit 10, dit de détermination de longueur de liaison, situé en aval du circuit d'extraction 9 et un amplificateur 11 inséré entre le circuit de détermination 10 et une entrée de commande du circuit correcteur 8, cet amplificateur 11 étant chargé de fournir un signal de commande de correction à partir du signal de sortie que fournit le circuit de détermination 10. Un étage de sortie 12 placé en aval du circuit correcteur 8 attaque la borne d'entrée E de l'appareil auquel l'interface est raccordée.

De manière connue,le signal vidéo émis par un appareil contient des tops de synchronisation périodiques ces tops sont ici mis à profit par les agencements selon l'invention pour l'établissement d'un signal de commande de correction, la valeur moyenne des tops de synchronisation reçus par l'interface en provenance de l'appareil distant étant exploitée pour déterminer quasi simultanément une correction des pertes réactives et une correction des pertes résistives en ligne.

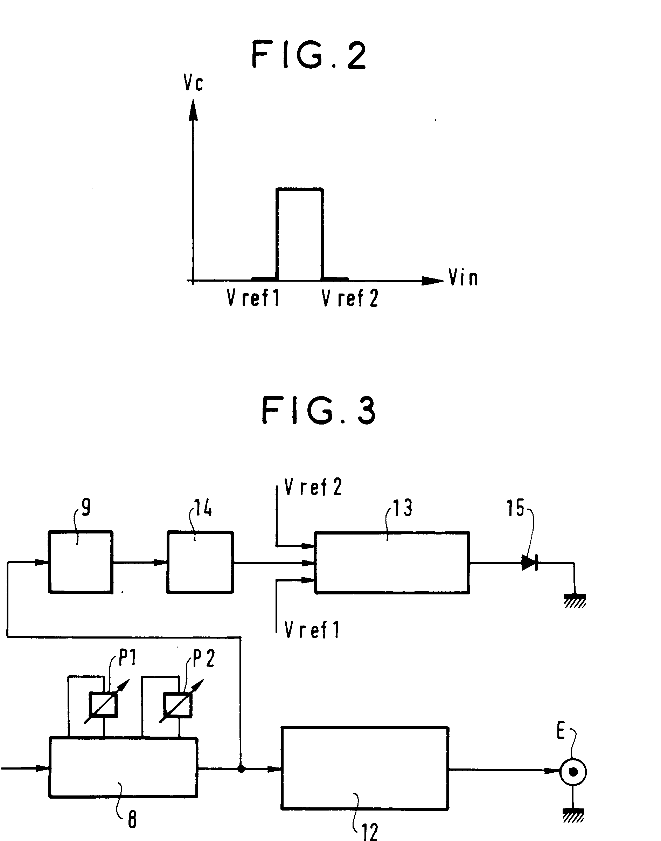

A cet effet dans une forme de réalisation, une première détermination s'effectue dès l'apparition d'un top de synchronisation et permet de déterminer la perte réactive subie par rapport à une valeur de référence Vref1 - voir figure 2 -.

Une seconde détermination s'effectue peu après, entre la phase de croissance et de décroissance d'un même top, par exemple avec un retard de 100 nanosecondes pour des tops de synchronisation dont la période est de quatre microsecondes, elle permet de déterminer la perte résistive subie par rapport à une valeur de référence Vref2.

Toutefois dans la mesure où, au point de vue des utilisateurs, c'est plus l'obtention des performances de transmission demandées que la connaissance directe des pertes qui importe à ce niveau, il est pratiquement équivalent d'exploiter les tops de synchronisation d'un signal vidéo qui ont été reçus et corrigés pour déterminer si les corrections effectuées sont dans les normes admises ou non.

Ceci est appliqué dans le premier exemple d'agencement de correction schématisé en figure 3.

Cet agencement est destiné à équiper un sous ensemble de voie réception 2 qui, comme indiqué plus haut, comporte un circuit correcteur 8 inséré entre un circuit d'entrée, non représenté sur cette figure, et un étage de sortie 12, ici supposé de type différentiel, qui attaque la borne d'entrée E de l'appareil vidéo que dessert le sous-ensemble 2.

Ce dernier comporte aussi un circuit d'extraction 9 permettant de récupérer les tops de synchronisation que comportent le signal vidéo qui a été reçu par l'étage d'entrée du sous-ensemble 2 en provenance de l'appareil vidéo distant et qui a été traité par le circuit correcteur 8.

Dans l'exemple proposé, ce circuit correcteur 8 comporte deux organes de commande de correction, ici symbolisés par des potentiomètres P1 et P2, respectivement chargés de commander, l'un, de la compensation des pertes réactives et l'autre de celle des pertes résistives.

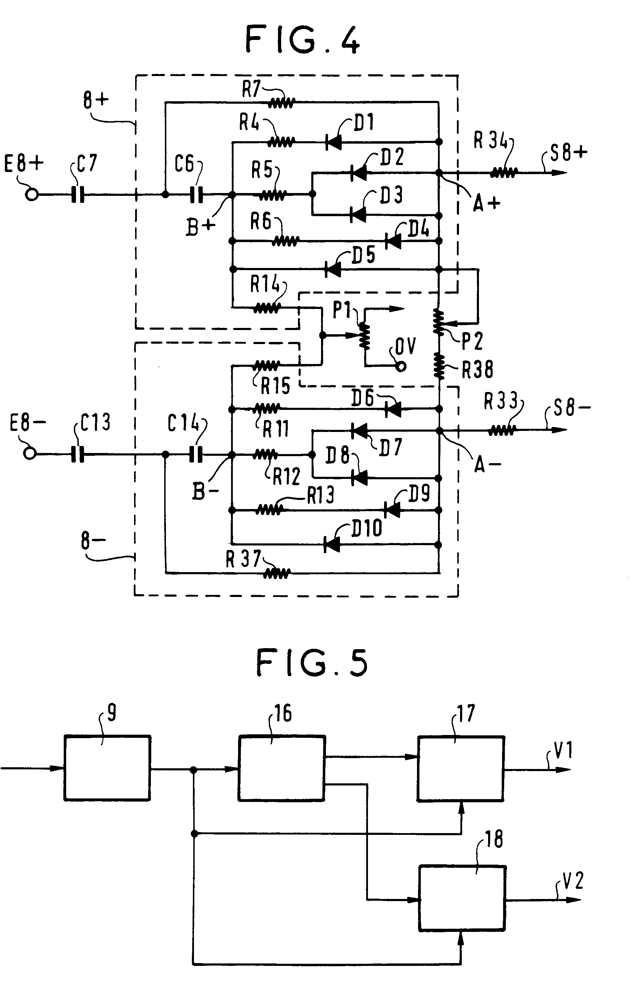

Un exemple de circuit correcteur 8 est présenté en figure 4, il reçoit sur deux entrées symétriques E8+ et E8- le signal vidéo fourni sous forme différentielle par l'étage d'entrée en sortie duquel il est placé et il fournit un signal vidéo corrigé à destination de l'appareil raccordé au sous-ensemble 2 qui le comporte, par deux sorties symétriques S8+ et S8-.

Le circuit correcteur 8 est constitué par un ensemble de diodes varicaps et de résistances organisé en deux sous-ensembles, référencés 8+ et 8-,qui sont plus spécifiquement associés chacun à un fil + ou - et qui sont constitués de manière identique.

Chaque sous-ensemble 8+ ou 8- est relié à l'une des bornes d'entrée E8+ ou E8- par une première capacité, référencée C7 ou C13, auquel une seconde capacité C6 ou C14 et une résistance R7 ou R37 sont reliés en parallèle.

Les résistances R7 et R37 sont reliées entre elles par l'intermédiaire d'un élément résistif réglable, ici composé d'une résistance R38 en série avec un potentiomètre P2, qui comme on l'a vu est destiné à permettre de corriger les pertes réactives en ligne qui dégradent le signal vidéo transmis aux entrées du circuit correcteur en provenance de I'appareil distant.

Le point A+ commun à la résistance R7 et au potentiomètre P2 est relié à la borne de sortie S8+ du circuit correcteur, via la résistance R34, dans les mêmes conditions que le point A- commun aux résistances R37 et R38 à la borne de sortie S8-, via la résistance R33.

Chacun des sous-ensemble 8+ ou 8- du circuit correcteur 8 est complété par un réseau à branches parallèles insérées entre la seconde capacité C6 ou C14 correspondante et l'un des points A+ ou A-, une résistance R14 ou R15, relie l'entrée B+ ou B- de chacun de ces sous-ensembles au point intermédiaire réglable du potentiomètre P1 prévu pour la correction des pertes résistives en ligne qui, comme indiqué plus haut, dégradent le signal vidéo reçu de l'appareillage distant par le circuit correcteur.

Chaque sous -réseau comporte ici deux branches composées chacune d'une résistance, R4 ou R6 dans un cas et R11 ou R13 dans l'autre, en série avec une diode varicap D1, D4, D6 ou D9, ces deux branches sont en parallèle avec deux autres branches dans le même sous-ensemble. L'une de ces dernières comporte uniquement une diode varicap D5 ou D10, alors que l'autre est composée d'une résistance R5 ou R12 en série avec deux diodes varicap D2 et D3 ou D7 et D8 en parallèles.

Le réglage des potentiomètres P1 et P2 permet d'agir respectivement sur le front et sur la valeur de plateau des tops de synchronisation reçus lorsque le signal vidéo est sans contenu image et correspond donc à une image noire de manière à fournir dans ces conditions à l'appareil vidéo raccordé aux bornes S8+ et S8- un signal considéré comme entrant dans les normes choisies dans la mesure où les tops de synchronisation qu'il contient sont corrigés de manière à respecter les normes considérées ci-dessus.

Dans la forme de réalisation proposée en liaison avec la figure 3, ceci est rendu possible en plaçant un comparateur à fenêtre 13 en aval du circuit d'extraction de signal de synchronisation 9, auquel ce comparateur est alors relié par un filtre 14.

Comme indiqué plus haut, le circuit d'extraction 9 est relié en sortie du circuit correcteur 8 en parallèle avec l'étage de sortie 12 du sous-ensemble de voie réception 2 qui le comporte.

Le comparateur à fenêtre 13 qui est en aval du filtre 14, reçoit aussi deux signaux représentatifs des valeurs de référence Vref1 et vref2 et il commande un indicateur visuel, par exemple une diode électro-luminescente 15, qui traduit, ici par son éclairement, la conformité des tops de synchronisation modifiés par le circuit correcteur 8 à la norme que les valeurs de référence Vref1 et Vref2 traduisent.

Une modification des réglages des potentiomètres P1, P2 est visuellement traduite par la diode électroluminescente à partir du moment où elle fait entrer ou sortir le signal corrigé de la norme préétablie.

Un dispositif d'automatisation pour agencement de correction est présenté sur la figure 5, il est prévu de l'associer à un circuit correcteur identique à celui décrit en liaison avec la figure 4, les signaux de réglage antérieurement fournis par les potentiomètres P1 et P2 sont alors directement produits par le dispositif d'automatisation.

A cet effet, le signal de synchronisation fourni par le circuit d'extraction 9 d'un sous-ensemble de voie réception 2, à partir du signal vidéo reçu d'un appareil distant, est appliqué à un séquenceur 16 qui déclenche alternativement le la prise en compte du signal de synchronisation, qu'il reçoit lui-même, par l'un ou l'autre de deux circuits de détermination de correction 17 et 18.

Ces circuits de détermination sont du type échantillonneur à mémoire et ils permettent chacun de prendre périodiquement en compte la valeur du signal qu'ils reçoivent du circuit d'extraction 9 afin de fournir une indication en valeur moyenne qui est ici exploitée en tant que signal de commande de correction et qui est par conséquent transmise au circuit correcteur 8, comme indiqué plus haut.

Dans la réalisation choisie, le circuit de détermination 17 est déclenché par le séquenceur 16 dès apparition des tops de synchronisation en sortie du circuit d'extraction 9 et il échantillonne chaque top à son apparition. La valeur moyenne V1 obtenue, à partir des tops successifs, est exploitée pour la correction des pertes réactives en ligne pour les raisons évoquées plus haut et elle est donc appliquée, directement ou non au niveau du point commun aux résistances R14 et R15 du circuit correcteur 8, tel que présenté en figure 4.

Le circuit de détermination 18 est déclenché par le séquenceur 16, à la suite du circuit de détermination 17, dans un délai qui est inférieur à la durée d'un top en étant par exemple à peine supérieur au temps de montée de top.

La valeur moyenne V2 obtenue par ce circuit de détermination 18 est exploitée pour la correction des pertes résistives en ligne et elle est appliquée au circuit correcteur en substitution de la valeur précédemment fournie par le potentiomètre P2 dans la réalisation précédemment présentée.

Il est possible de prévoir l'exploitation d'un arrangement de visualisation du résultat à comparateur 13 et diode électroluminescente 15, tel que prévu en liaison avec la réalisation proposée en figure 3, lorsque le dispositif d'automatisation présenté en figure 5 est mise en oeuvre, la présence d'un tel arrangement n'étant, toutefois, pas indispensable.

Il est également envisageable de placer le circuit extracteur de synchronisation 9 soit directement en aval de l'étage d'entrée 9 d'un sous-ensemble de voie réception 2, soit en aval du circuit correcteur 8 lorsque le dispositif d'automatisation présenté en liaison avec la figure 5 est mis en oeuvre.

## Revendications

**1/** Procédé de correction des pertes affectant des signaux de type vidéo, comportant des tops de synchronisation périodiques qui sont transmis par une liaison de type paire de fils, caractérisé en ce que la valeur moyenne des tops de synchronisation est exploitée pour déterminer deux facteurs de correction des pertes de transmission dues à la liaison, un premier facteur correctif de perte réactive étant obtenu à partir de la valeur déterminée à l'apparition des tops de synchronisation, un second facteur correctif de perte résistive étant obtenu à partir d'une valeur déterminée en cours de top, entre les phases de croissance et de décroissance de top.

**2/** Interface, pour liaison de transmission par paire(s) de fils (3) pour signal vidéo, comportant au moins un sous-ensemble de voie réception (2) dans lequel un signal vidéo, reçu d'un appareil vidéo distant relié au sous-ensemble par une paire de fils (3b) de la liaison, est reconstitué, au profit d' un autre appareil vidéo raccordé à l' interface, caractérisée en ce qu'elle comporte un agencement de correction chargé de compenser les pertes de signal introduites par la liaison de transmission au profit dudit autre appareil vidéo, ledit agencement comportant lui-même un circuit correcteur (8), qui est situé entre un étage d'entrée (7) et un étage de sortie (12) du sous-ensemble (2), et qui corrige le signal vidéo qu'il reçoit en fonction de deux valeurs moyennes déterminées à partir des tops de synchronisation, l'une à partir de la valeur de ces tops à leur apparition et l'autre à partir de la val eur de ces mêmes tops, entre la phase de croissance et de décroissance de chacun.

**3/** Interface selon la revendication 2, caractérisée en ce qu'elle comporte un circuit correcteur (8) doté de deux entrées de commande l'une pour la compensation des pertes réactives dues à la liaison de transmission et l'autre pour la compensation des pertes résistives dues à cette même liaison.

**4/** Interface selon la revendication 3, caractérisée en ce qu'elle comporte un circuit correcteur (8) à commandes manuelles (P1, P2) dont la sortie attaque d'une part l'étage de sortie (12) du sous-ensemble de voie réception (2) le comportant et d'autre part le circuit d'extraction de synchronisation (9) de ce sous-ensemble, ce circuit d'extraction attaquant lui-même, via un filtre (14), un comparateur à fenêtre (13) qui reçoit aussi deux valeurs de référence (Vref1 et Vref2) et qui attaque un indicateur visuel (15) traduisant par son éclairement la conformité, à la norme que traduisent les valeurs de référence, des tops de synchronisation ne sortie du correcteur.

**5/** Interface selon la revendication 3, caractérisée en ce qu'elle comporte un circuit correcteur (8) dont la sortie attaque d'une part l'étage de sortie (12) du sous-ensemble de réception le comportant et d'autre part le circuit d'extraction de synchronisation (9) de ce sous-ensemble, ce circuit d'extraction attaquant lui-même un séquenceur (16) et deux circuits de détermination de correction (17, 18), du type échantillonneur à mémoire, le séquenceur activant successivement les circuits de détermination (15) l'un à l'apparition des tops de synchronisation et l'autre peu après entre les phases de croissance et de décroissance de chaque top, chaque circuit de détermination contrôlant l'une des entrées de commande du circuit correcteur.
